# EUROPÄISCHE PATENTANMELDUNG

(11) **EP 1 162 434 A1**
(43) Veröffentlichungstag der Anmeldung: **12.12.2001**
(21) Anmeldenummer: 01112585.3
(22) Anmeldetag: 23.05.2001
(51) Int. Cl.: G01C 21/34

(54) **Verfahren und Vorrichtung zum Ansteuern von Zwischenzielen**

(30) Priorität: 09.06.2000 DE 10028662
(71) Anmelder: NOKIA MOBILE PHONES LTD., 02150 Espoo (FI)
(72) Erfinder: Baur, Reinhold, 89233 Neu-Ulm (DE); Kettula, Jan, 89075 Ulm-Donau (DE); Prestele, Peter, 89269 Vöhringen (DE)
(74) Vertreter: TER MEER STEINMEISTER & PARTNER GbR

(57) **Zusammenfassung**

Beim Ansteuern eines Zwischenziels bei der Navigation, z. B. eines Kraftfahrzeugs entlang einer voreingestellten Reiseroute zu einem Reiseziel unter Verwendung einer Navigationseinrichtung (11) wird der Navigationseinrichtung eine Kategorie eines Zwischenziels mitgeteilt, und es wird ihr angegeben, nach welcher Zeit das Zwischenziel erreicht werden soll. Die Navigationseinrichtung wird dann bei der Navigation entlang der Reiseroute automatisch ein solches Zwischenziel der genannten Kategorie auswählen und ansteuern, das zum angegebenen Zeitpunkt erreicht werden kann.

## Beschreibung

Die Erfindung betrifft ein Verfahren zum Ansteuern von Zwischenzielen gemäß dem Anspruch 1 sowie eine Vorrichtung zur Durchführung des Verfahrens nach Anspruch 5.

Gemäß dem Stand der Technik sind Anordnungen bekannt, die nach der Eingabe eines Ziels eine Wegstrecke zu diesem Ziel ausgeben. Diese Anordnungen, welche auch als Navigationssysteme oder Routefinder bekannt sind, sind in aller Regel mit einem GPS-Modul zur Ermittlung der momentanen geographischen Position, einer Datenbank und einer Kalkulationsanordnung versehen, die anhand der vom GPS-Modul gelieferten Daten zusammen mit den Daten der Datenbank die Wegstrecke zum Ziel ermittelt. Je nach Ausbildung kann die ermittelte Streckenführung dem Nutzer optisch und/oder akustisch bereitgestellt werden.

Diese bekannten Systeme sind nicht nur auf die Führung zu Endzielen beschränkt, sondern erlauben es auch eine beschränkte Anzahl von Zwischenzielen einzugeben. Will sich beispielsweise ein Nutzer von Frankfurt nach München fahren lassen und dabei in Karlsruhe noch einen weiteren Termin wahrnehmen, muss er neben der Zieleingabe (München, Ottostraße 4) auch noch die Ortseingabe für sein Zwischenziel (Karlsruhe, Karlstraße 8) eingeben. Dies ist zwar umständlich, aber bei Individualzielen nicht anders möglich. Allerdings gibt es viele Zwischenziele, die zwar für den Nutzer von Interesse sind, jedoch deren genaue Anschrift bedeutungslos ist. Will beispielsweise ein Nutzer auf seiner Fahrt von A nach B ein seinen Ansprüchen entsprechendes Mittagessen einnehmen, ist er gehalten, sich zunächst über entsprechende Gaststätten und/oder Hotels zu informieren und, nachdem er fündig geworden ist, die gefundene Gaststätte mit voller Anschrift als Zwischenziel dem Routefinder mitzuteilen. Abgesehen davon, daß diese Vorgehensweise umständlich ist, hat sie auch den Nachteil, daß die Führung zum Zwischenziel für den Nutzer bedeutungslos wird, wenn er etwa durch staubedingte Verzögerungen die von ihm ausgewählte Gaststätte nicht mehr in dem von ihm geplanten Zeitfenster erreichen kann.

Der Erfindung liegt die Aufgabe zugrunde, ein Verfahren und eine Vorrichtung anzugeben, um eine sehr flexible Führung zu nur kategoriemäßig interessierenden Zwischenzielen zu ermöglichen, wobei der Eingabeaufwand auf ein Minimum reduziert sein soll.

Eine verfahrensseitige Lösung der gestellten Aufgabe ist im Anspruch 1 angegeben. Dagegen findet sich eine vorrichtungsseitige Lösung der gestellten Aufgabe im Anspruch 5. Vorteilhafte Ausgestaltungen der Erfindung sind in den jeweils nachgeordneten Unteransprüchen gekennzeichnet.

Bei einem erfindungsgemäßen Verfahren zum Ansteuern eines Zwischenziels bei der Navigation entlang einer voreingestellten Reiseroute zu einem Reiseziel unter Verwendung einer Navigationseinrichtung wird eine Kategorie eines Zwischenziels der Navigationseinrichtung mitgeteilt und ihr angegeben, nach welcher Zeit das Zwischenziel erreicht werden soll. Bei der Navigation entlang der Reiseroute zum Reiseziel wird dann die Navigationseinrichtung automatisch ein solches Zwischenziel der genannten Kategorie auswählen und ansteuern, das zum angegebenen Zeitpunkt erreicht werden kann.

Nach Eingabe der Kategorie des Zwischenziels und der Zeit, nach der das Zwischenziel erreicht werden soll, überwacht die Navigationseinrichtung bei der Navigation entlang der voreingestellten Reiseroute automatisch die Umgebung und sucht die Landkarte nach Zwischenzielen der genannten Kategorie ab. Dabei werden fortlaufend die Zeiten ermittelt, die von der voreingestellten Reiseroute bis zu den Zwischenzielen nötig sind, um die Zwischenziele zu erreichen. Wird festgestellt, daß die Zwischenziele zu früh erreicht werden, wird die Navigation entlang der voreingestellten Reiseroute fortgesetzt, diese also nicht verlassen. Erst wenn Zwischenziele der genannten Kategorie aufgefunden werden, die kurz vor Ablauf der voreingestellten Zeit erreicht werden können, erfolgt die Navigation zu einem solchen kategoriemäßig bestimmten Ziel. Dies kann neben der voreingestellten Fahrtroute liegen oder aber auch auf der voreingestellten Fahrtroute, wenn es sich zum Beispiel um eine Autobahn-Raststätte handelt.

Kategorien von Zwischenzielen sind z. B. Restaurants, Hotels, Tankstellen, Museen usw., aber auch Restaurants oder Hotels bestimmter Klassen, und dergleichen.

Die Mitteilung an die Navigationseinrichtung bezüglich der Kategorie des Zwischenziels und die Eingabe der Zeit, nach der das Zwischenziel erreicht werden soll, können vor Beginn oder während der Navigation entlang der Reiseroute erfolgen. Dabei ist es nach einer vorteilhaften Ausgestaltung der Erfindung auch möglich, durch die Navigationseinrichtung nur solche Zwischenziele auswählen und ansteuern zu lassen, die in Richtung zum Reiseziel liegen. Auf diese Weise wird vermieden, daß sich der Reiseweg zu stark verlängert.

Möglich ist es auch, durch die Navigationseinrichtung nur solche Zwischenziele auswählen und ansteuern zu lassen, die zum Zeitpunkt der Auswahl unterhalb einer vorgegebenen Entfernung zur Navigationseinrichtung liegen. Hierdurch lässt sich vermeiden, daß z. B. die voreingestellte Reiseroute zu früh verlassen und ein zu weiter Weg zum Zwischenziel zurückgelegt werden muss.

Eine erfindungsgemäße Vorrichtung zum Ansteuern eines Zwischenziels bei der Navigation entlang einer voreingestellten Reiseroute zu einem Reiseziel unter Verwendung einer Navigationseinrichtung enthält eine erste Eingabeeinrichtung zur Mitteilung der Kategorie eines Zwischenziels an die Navigationseinrichtung, und eine zweite Eingabeeinrichtung, um der Navigationseinrichtung anzugeben, nach welcher Zeit das Zwischenziel erreicht werden soll. Die Navigationseinrichtung ist dabei so ausgebildet, daß sie bei der Navigation entlang der Reiseroute automatisch ein solches Zwischenziel der genannten Kategorie auswählt und ansteuert, das zum angegebenen Zeitpunkt erreicht werden kann.

Da die Navigationseinrichtung bei der Navigation entlang der voreingestellten Fahrtroute zum Reiseziel laufend nicht nur die Umgebung nach kategoriemäßig vorgegebenen Zwischenzielen absucht, sondern auch die Verkehrssituation auf der voreingestellten Fahrtroute sowie auf den möglichen Strecken zu den Zwischenzielen in Betrag zieht, können Verkehrstaus, Umleitungen usw., bei der Navigation berücksichtigt werden und insbesondere bei der Entscheidung, welches der Zwischenziele der genannten Kategorie anzusteuern ist. Damit ist sichergestellt, daß ein Nutzer auch in unvorhergesehenen Fällen immer rechtzeitig am Zwischenziel ankommt.

### Kurze Darstellung der Figuren

Es zeigen:
- Fig. 1: einen Ablauf einer Eingabe von Ziel- und Zwischenziel gemäß dem Stand der Technik;
- Fig. 2: einen Ablauf einer Eingabe von Ziel- und Zwischenziel gemäß der Erfindung;
- Fig. 3: nähere Einzelheiten einer Zwischenzieleingabe gemäß Fig. 2 und
- Fig. 4: einen Ablauf zur Eingabe eines Vorgabedialogs für Zwischenziele.

### Wege zum Ausführen der Erfindung

Die Erfindung soll nun an Hand anhand der Figuren näher erläutert werden.

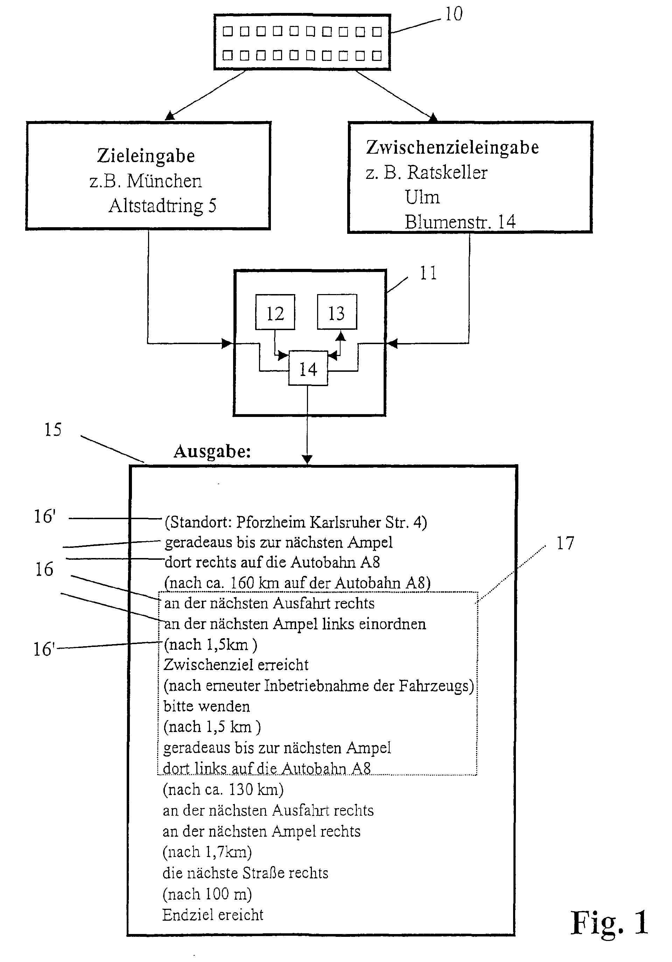

In Fig. 1 ist der Ablauf einer Datenein- und Datenausgabe gemäß dem Stand der Technik für eine Fahrt von Pforzheim, Karlsruher Str. 4 nach München, Altstadtring 3 veranschaulicht, wobei das Zwischenziel die Gaststätte Ratskeller in der Blumenstr. 14 in Ulm sein soll.

Will ein Nutzer, der eine solche Fahrt unternehmen will, sich von einem Routefinder führen lassen, muss er zunächst die Zieleingabe (München, Altstadtring 5) manuell über eine Tastatur 10 eingeben oder aber der Anordnung 11 die Zieleingabe beispielsweise durch Übertragung eines die Zieleingabe enthaltenden Datensatzes mitteilen. Soll die Fahrt beispielsweise in Ulm für ein Mittagessen unterbrochen werden, ist der Nutzer gehalten, dieses Zwischenziel über die Tastatur 10 mitzuteilen, und zwar vor oder während der Fahrt zum Ziel. Dies erfordert nicht nur Kenntnisse vom Zwischenziel (z.B. Namen der Gaststätte oder Anschrift der Gaststätte), sondern auch zusätzliche Eingabearbeit. Letzteres ist nicht unkritisch, wenn beispielsweise die Eingaben für das Zwischenziel während der Fahrt vom Fahrer des Fahrzeugs gemacht werden. Auch wenn die Eingabeprobleme während der Fahrt durch eine Spracheingabe gemindert werden können, bleibt immer noch das Problem der Kenntnis von der Adresse des Zwischenziels.

Sind die jeweiligen Eingaben für das Ziel (München, Altstadtring 5) und das Zwischenziel (Ulm, Blumenstr. 14) gemacht und an die Anordnung 11 übergeben, wird aus diesen Eingaben die Wegstrecke ermittelt. Zu diesem Zweck ist die Anordnung 11 mit einen GPS-Modul 12, einer Datenbank 13 und Kalkulationsanordnung 14 versehen. Nur der Vollständigkeit halber sei darauf hingewiesen, daß die Datenbank 13 nicht notwendig in der Anordnung 11 integriert sein muss, sondern kann entweder ganz oder zumindest teilweise entfernt von der Anordnung 11 eingerichtet sein und mit dieser beispielsweise drahtlos in Datenaustausch stehen.

Da der momentane Standort der Anordnung 11 dieser aufgrund der vom GPS-Modul 12 gelieferten Daten bekannt ist, kann gestützt durch die in der Datenbank 13 ablegten Informationen aus diesen Daten zusammen mit den Daten für die Ziel- und Zwischenzieleingabe in der Kalkulationsanordnung 14 die Wegstrecke ermittelt werden. Dies führt dann zu einer Ausgabe, die in Fig. 1 mit dem Bezugszeichen 15 versehen ist. Um möglichen Missverständnissen in diesem Zusammenhang vorzubeugen, sei darauf hingewiesen, daß die Ausgabe der Wegstrecke nicht -so wie in Fig. 1 dargestellt- als fortlaufender Text auf einem Display erscheinen muss, sondern daß die jeweiligen Zeileninformationen 16 auch beispielsweise als Sprachausgabe in Abhängigkeit von der bereits zurückgelegten Wegstrecke dem Nutzer zur Verfügung gestellt werden können.

Deutlich ist der Ausgabe 15 entnehmbar, daß einige der Zeileninformationen 16 mittels eines punktierten Linienzugs 17 umrandet sind. Bei diesen Zeileninformationen 16 handelt es sich zum solche, die notwendig sind, um das Zwischenziel auf der Wegstrecke von Pforzheim nach München zu erreichen. Nur der Vollständigkeit halber sei erwähnt, daß die in der Darstellung der Ausgabe 15 eingeklammerten Zeileninformationen 16' nicht ausgegeben werden, sondern lediglich zum besseren Verständnis der Erfindung dienen.

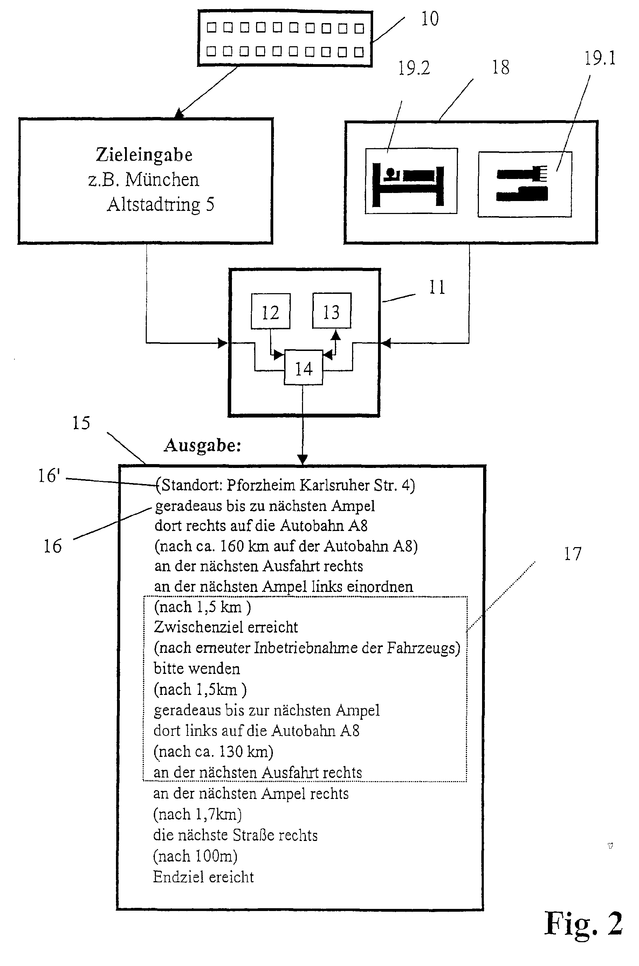

In Fig. 2 ist ein Ablauf gemäß der Erfindung gezeigt, welcher im wesentlichen dem Ablauf gemäß Fig. 1 entspricht, so daß in Fig. 1 verwendeten Bezugszeichen auch in Fig. 1 ihre Gültigkeit behalten.

Abweichend von Fig. 1 ist in Fig. 2 eine Funktionseinheit 18 vorhanden, die zwei körperlichen Tasten 19 ausweist. Die eine Taste 19.1 ist mit einem Gaststätten- und die andere Taste 19.2 mit einem Hotelsymbol versehen. Sofern körperliche Tasten 19 vermieden werden sollen, kann in einem anderen - nicht weiter dargestellten Ausführungsbeispiel - die Funktionseinheit 18 mit virtuellen Tasten versehen sein, indem beispielsweise auf einem Display mit einem Cursor betätigungsfähige und die Gaststätten und Hotelsymbole tragenden Schaltflächen bereitgestellt werden. Sollen wie auch immer ausgebildete Tasten vermieden werden, kann die Funktionseinheit 18 auch mit einem Mikrofon mit angeschlossener und beispielsweise auf die Begriffe Gaststätte und Hotel reagierenden Spracherkennungseinheit versehen sein.

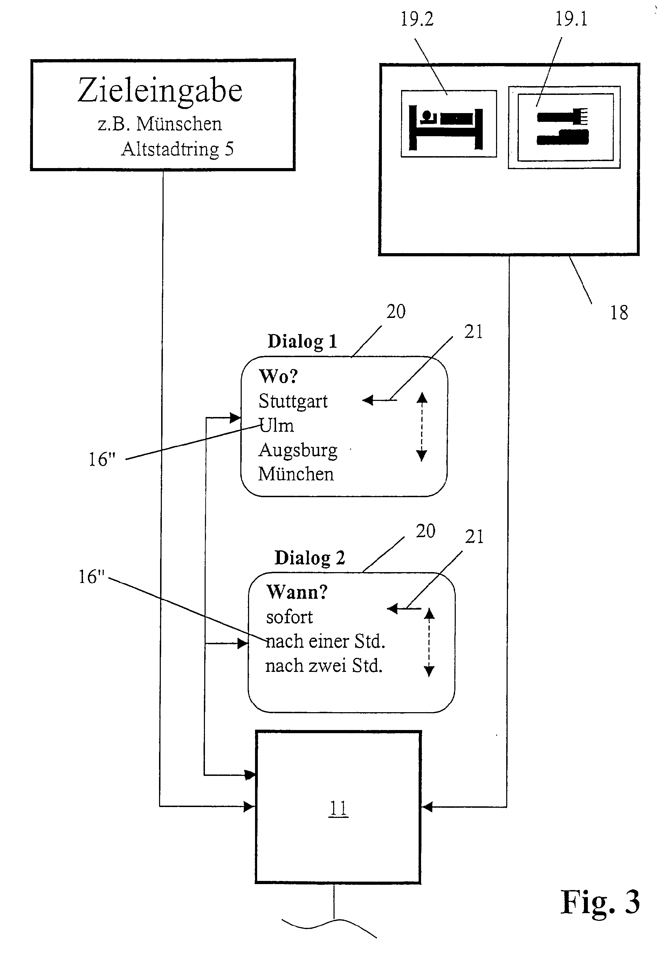

Wird nun, wie in Fig. 3 durch die graue Umrandung angedeutet, die Taste 19.2 mit dem Gaststättensymbol betätigt oder aber bei der nicht weiter gezeigten und ein Mikrofon mit angeschlossener Spracherkennung aufweisenden Funktionseinheit der Begriff "Gaststätte" der Funktionseinheit 18 mitgeteilt, wird ein Dialog geöffnet.

Ein solcher Dialog ist in Fig. 3 gezeigt und wird dort als Dialog 1 bezeichnet. Dieser Dialog 1 weist eine Reihe von Zeileninformationen 16" auf und umfasst eine Auflistung von Ortsnamen, die entlang der Wegstrecke zwischen dem Ausgangsort (Pforzheim) und dem Zielort (München) liegen. Mittels des ebenfalls im Dialog 1 vorhandenen Cursors 21 kann dann der Ort ausgewählt werden, in dem der Nutzer beispielsweise ein Mittagessen in einer Gaststätte plant. Wurde im Dialog 1 keiner der angebotenen Orte gewählt oder hat der Nutzer keine Zielorteingabe (München) getätigt, kann die Anordnung 11 so organisiert sein, daß dann mittels des GPS-Moduls 12 die momentane Position ermittelt und dann anhand dieser Position eine Auswahl von Orten und/oder Gaststätten im Dialog 1 bereitgestellt werden, die im Umkreis von beispielsweise von 15 km liegen.

Bestätigt der Nutzer im Dialog 1 beispielsweise die Zeileninformation 16" (Ulm), wird er bei seiner Fahrt von Pforzheim nach München dann zu einer Gaststätte in Ulm geführt, ohne daß besondere Kenntnisse von der Lage der Gaststätte erforderlich sind.

In Fig. 3 ist neben dem Dialog 1 noch ein Dialog 2 gezeigt. Dieser Dialog 2 kann je nach Ausgestaltung entweder den Dialog 1 ersetzen oder aber als aufrufbare Alternative zum Dialog 1 dem Nutzer angeboten werden. Dieser Dialog 2 unterscheidet sich vom Dialog 1 dadurch, daß dort dem Nutzer nicht Ortsangaben, sondern Zeitfenster als Zeileninformationen 16" zur Verfügung gestellt werden. Hat der Nutzer auf seiner Fahrt von Pforzheim nach München beispielsweise zu einem Zeitpunkt t1 die Taste 19.1 betätigt und im Dialog 2 im Feld 20 mit dem Cursor 21 die Zeileninformation 16" (nach einer Stunde) ausgewählt und bestätigt, wird für den Zeitpunkt t2 = t1 + 60 min eine Gaststätte entlang der Wegstrecke gesucht und der Nutzer zu dieser Gaststätte geführt, indem beispielsweise zum einem Zeitpunkt t2 - 10 min mittels des GPS-Modus 12 die zum Zeitpunkt t2 -10 min gültige Position ermittelt wird und ausgehend von dieser Position nach einer Gaststätte gesucht und der Nutzer zu dieser Gaststätte geführt wird.

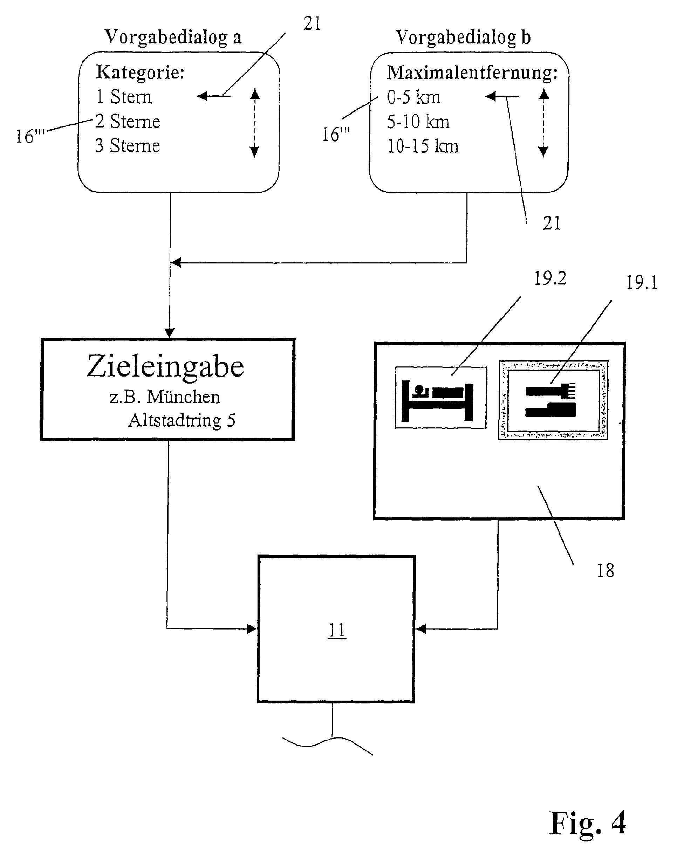

Da mittels der zuvor geschilderten und über die Funktionseinheit 18 ausgelösten Führung irgendeine Gaststätte oder irgendein Hotel ausgesucht wird und diese Gaststätte oder dieses Hotel möglicherweise nicht den Vorstellungen des Nutzers entspricht, ist ein Vorgabedialog vorgesehen. In Fig. 4 sind zwei Vorgabedialoge a, b gezeigt, die sich auf die Taste 19.1 (angedeutet durch die Umrandung) beziehen. Hat der Nutzer den Vorgabedialog a aufgerufen, kann er dort mit dem Cursor 21 die Kategorie der Gaststätte auswählen, während er im Vorgabedialog b die maximale Entfernung der Gaststätte von der Wegstrecke einstellen kann. Da die Vorgabedialoge nicht nur auf die beiden in Fig. 4 gezeigten Vorgabedialoge a und b beschränkt sein müssen und die Einstellungen in den Vorgabedialogen umfangreich sein können, ist vorgesehen, daß die Vorgabedialoge a, b nur aufgerufen werden können, wenn bei einer Anwendung in einem Kraftfahrzeug, sich dieses im Stand befindet. Hat der Nutzer in dem Vorgabedialog a als Zeileninformation 16"' "2 Sterne" und im Vorgabedialog b als Zeileinformation 16"' "0-5 km" angewählt und bestätigt, wird der Nutzer bis zu einer Änderung dieser Einträge in den Vorgabedialogen a und b bei Betätigung der Taste 19.1 durch die entsprechende Ausgaben immer zu solchen Gaststätten geführt, die die Kategorie "2 Sterne" haben und nicht mehr als 5 km von der Wegstrecke entfernt liegen. Für die Fahrt von Pforzheim nach München bedeutet dies, daß wenn der Nutzer gemäß Fig. 3 durch Betätigung der Taste 19.2 im Dialog 1 in Ulm einen Gaststättenaufenthalt bestätigt, er dann zu der Gaststätte Ratskeller in der Blumenstr. 14 in Ulm geleitet wird, wenn diese Gaststätte die Kriterien entsprechend den Vorgabedialogen a und b erfüllt. Ist dies nicht der Fall, etwa weil bezogen auf die momentane Position die Entfernungsangabe entsprechend dem Vorgabedialog b nicht mehr eingehalten werden kann oder weil die Gaststätte Ratskeller eine solche mit 3 Sternen ist, wird der Nutzer dann zu einer anderen, die Kriterien der Vorgabedialoge a und b erfüllende, Gaststätte in Ulm geleitet.

Nur der Vollständigkeit halber sei darauf hingewiesen, daß die Funktionseinheit 18 nicht notwendig auf die Wegführung zu Gaststätten und Hotels beschränkt sein muss. Vielmehr kann in einem anderen Ausführungsbeispiel auch die Wegführung zu Tankstellen oder Sehenswürdigkeiten in dieser Weise organisiert sein.

Darüber hinaus kann auch vorgesehen sein, daß einem Nutzer, der beispielsweise an bestimmten Museen interessiert ist, diese Museen angezeigt werden, wenn ihm seine Wegstrecke an einem solchen Museum vorbeiführt und der Nutzer einmal, etwa vor Fahrtantritt in einer den Vorgabedialogen ähnlichen Maske die Art der Museen sowie ihre maximale Entfernung von der Wegstrekke eingegeben hat. Bestätigt der Nutzer dann später während der Fahrt die Anzeige eines gefundenen Museums, wird er automatisch zu dem Museum geleitet.

## Patentansprüche

1. Verfahren zum Ansteuern eines Zwischenziels bei der Navigation entlang einer voreingestellten Reiseroute zu einem Reiseziel unter Verwendung einer Navigationseinrichtung, bei dem eine Kategorie eines Zwischenziels der Navigationseinrichtung mitgeteilt und angegeben wird, nach welcher Zeit das Zwischenziel erreicht werden soll, und bei dem die Navigationseinrichtung bei der Navigation entlang der Reiseroute automatisch ein solches Zwischenziel der genannten Kategorie auswählt und ansteuert, das zum angegebenen Zeitpunkt erreicht werden kann.

2. Verfahren nach Anspruch 1, **dadurch gekennzeichnet, daß** die Mitteilung der Kategorie des Zwischenziels und die Eingabe der Zeit, nach der das Zwischenziel erreicht werden soll, vor Beginn oder während der Navigation entlang der Reiseroute erfolgt.

3. Verfahren nach Anspruch 1 oder 2, **dadurch gekennzeichnet, daß** durch die Navigationseinrichtung nur solche Zwischenziele ausgewählt und angesteuert werden, die in Richtung zum Reiseziel liegen.

4. Verfahren nach Anspruch 1, 2 oder 3, **dadurch gekennzeichnet, daß** die Navigationseinrichtung nur solche Zwischenziele auswählt und ansteuert, die zum Zeitpunkt der Auswahl unterhalb einer vorgegebenen Entfernung zur Navigationseinrichtung liegen.

5. Vorrichtung zum Ansteuern eines Zwischenziels bei der Navigation entlang einer voreingestellten Reiseroute zu einem Reiseziel unter Verwendung einer Navigationseinrichtung (11) mit einer ersten Eingabeeinrichtung (18, 19.1, 19.2) zur Mitteilung der Kategorie eines Zwischenziels an die Navigationseinrichtung (11), und mit einer zweiten Eingabeeinrichtung (20, 21) um der Navigationseinrichtung (11) anzugeben, nach welcher Zeit das Zwischenziel erreicht werden soll, wobei die Navigationseinrichtung (11) so ausgebildet ist, daß sie bei der Navigation entlang der Reiseroute automatisch ein solches Zwischenziel der genannten Kategorie auswählt und ansteuert, das zum angegebenen Zeitpunkt erreicht werden kann.

6. Vorrichtung nach Anspruch 5, **gekennzeichnet durch** eine Eingabeeinrichtung zur Eingabe von Entfernungen zur Navigationseinrichtung, bis zu denen die Zwischenziele bei ihrer Auswahl liegen dürfen.
